# EUROPEAN PATENT SPECIFICATION

(11) **EP 2 542 388 B1**
(45) Date of publication and mention of the grant of the patent: **07.05.2014**
(21) Application number: 10707877.6
(22) Date of filing: 01.03.2010
(51) Int. Cl.: B25J 5/00, B25J 5/02, B25J 5/04, B25J 19/00, E02B 17/00

(54) **INSTALLATION WITH MOBILE ROBOT FOR A HARSH, CORROSIVE OUTDOOR ENVIRONMENT**
ANLAGE MIT MOBILEM ROBOTER FÜR RAUE UND KORRODIERENDE AUSSENANWENDUNGEN
INSTALLATION AVEC ROBOT MOBILE POUR DES ENVIRONEMENTS EN PLEIN AIR CORROSIFS ET EXIGEANTS

(43) Date of publication of application: 09.01.2013
(73) Proprietor: ABB AS, 1396 Billingstad (NO)
(72) Inventor: PRETLOVE, John, N-1338 Sandvika (NO); SKOURUP, Charlotte, N-3021 Drammen (NO); GUNNAR, Johan, N-5918 Frekhaug (NO); ANISI, David, N-0478 Oslo (NO)
(74) Representative: Savela, Reino Aleksi
(86) International application number: PCT/EP2010/052532
(87) International publication number: WO 2011/107137

(56) References cited:
- WO-A1-87/01672
- WO-A1-87/02640
- WO-A1-03/047958
- WO-A1-2005/054048
- GB-A- 2 182 898
- JP-A- 1 005 783
- US-A- 4 502 407

## Description

### FIELD OF THE INVENTION

The present invention relates to an installation adapted for extraction or production of petroleum products in a harsh outdoors environment, comprising at least one industrial robot including a plurality of arms movable relative each other about a plurality of joints and electrical motors moving the arms, and being moveable between two or more locations of said installation by means of a transport apparatus. The present invention also relates to a method for operating such an industrial robot in such an installation. Such an installation and method are disclosed in WO-A-2005 054 048.

### TECHNICAL BACKGROUND

Within the field of oil and gas, oil companies continuously seek to create and increase business value of oil and gas installations, whilst also maintaining an absolute focus on Health, Safety and Environment (HSE). To address these issues, a major rethink on the conventional operation and support of oil & gas installations is required. It is well documented that industrial robots with flexible manipulators are well suited to conduct dangerous and labor intensive tasks in hazardous conditions with a high degree of accuracy.

Conventional industrial robots are not designed for offshore use. Even though there has been a trend to develop robots for certain environments such as to be explosion safe, water resistant, and to tolerate low temperature below the freezing point and high temperatures, there still is a way to go to make the robots ready for offshore use. One of the main challenges to overcome is to make the robot resistant to the weather-induced material degradation phenomenon and especially, corrosion and other damages from salt water and sour gas exposure.

Corrosion means the breaking down of essential properties in a material due to chemical reactions with its surroundings. In the most common use of the word, this means a loss of electrons of metals reacting with water and oxygen. Weakening of iron due to oxidation of the iron atoms is a well-known example of electrochemical corrosion. This is commonly known as rust. This type of damage usually affects metallic materials, and typically produces oxide(s) and/or salt(s) of the original metal. Corrosion also includes the dissolution of ceramic materials and can refer to discoloration and weakening of polymers by the sun's ultraviolet light.

Most structural alloys corrode merely from exposure to moisture in the air, but the process can be strongly affected by exposure to certain substances. Corrosion can be concentrated locally to form a pit or crack, or it can extend across a wide area to produce general deterioration. While some efforts to reduce corrosion merely redirect the damage into less visible, less predictable forms, controlled corrosion treatments such as passivation and chromate-conversion will increase a material's corrosion resistance.

Examples of different types of corrosion:
- General corrosion
- Pitting
- Galvanic corrosion

Further, the robot needs to be explosion safe which means that it generates limited amount of energy and heat in all electrical motors to avoid sparks. Further, the robot manipulator has to be IP67 certified which means that it is completely protected from intrusion of dust (including other small objects) and it is water resistant (no ingress of water when immersed up to 1 metre). Finally, the robot is protected from influences from extreme temperatures (high and/or low) and wind. The protection may consist of coating(s) (such as for IP67 certified robots), overpressure in the motors and/or heating/cooling of the motors. Alternatively, the protection of the robots may be in form of a heating/cooling jacket which may also be water resistant (the robot manipulator may still be water proof due to condensation, etc.

An additional source of corrosion in oil and gas installations occurs in some fields or installations with the presence of certain high sulphur content or sour petroleum substances. In certain petroleum deposits occurrence of elemental sulphur and sulpur-based compounds such as hydrogen sulphide, sulphates and sulphuric acid cause damage by corrosion to machinery and pose a threat to human operators in terms of gas toxicity and chemical irritation or burns.

The effects on material exposed to sour gas (hydrogen sulfide, H2S and/or elemental sulfur, S), have been studied for decades and include, in addition to aggressive corrosion, so called Sulfide Stress Cracking (SSC), which is a material degradation phenomenon. In general, corrosion control in sour gas fields is much harder than in sweet gas fields which contain little or no H2S, since in the latter case there exist effective corrosion inhibitors. This is partly due to the fact that H2S is highly reactive with two very common elements, namely water and oxygen and produce elemental sulfur (S) and sulfuric acid (H2SO4) which both have strong corrosive properties. The H2S corrosion reactions have the following form:

H2S + 4 H2O → H2SO4 + 4 H2,

H2S + 2O2 → H2SO4

H2S + O2 → S + H2O

The generation of elemental sulfur in aqueous atmosphere can be real dangerous in industrial setting as it leads to localized corrosivity.

### OBJECTS AND SUMMARY OF THE INVENTION

The object of the present invention is to increase the lifetime of a robot working in a harsh and corrosive outdoor environment.

According to the present invention, this object is achieved by an installation according to claim 1 and by a method according to claim 15.

Further developments of the installation and of the method are characterized by the features of the dependent claims.

This invention describes a harsh-approved manipulator developed for harsh outdoor environments with a focus on being protective against corrosion and other damages from salt water, the robot being arranged as a mobile robot that may be moved around on the installation site either by a gantry crane or overhead rail, or else by vehicles, autonomous or guided. The robot manipulator is a standardized industrial robot with electrical motors which is further developed to operate under harsh climate conditions where it is exposed to salt water and/or other aggressive chemical substances, which may have a corrosive effect on the robot.

It is proposed to implement robotics technology on oil & gas installations together with a redesign of the process equipment into compact standardized process modules. This novel concept will result in a remotely operated oil & gas facility capable of conducting inspection, maintenance and normal operational tasks and hence, improve HSE, industrial Health and Safety Executive i.e. reduce or remove issues of workplace safety. Also, the need for facilities for staff offshore will be reduced radically, which means lower weight of the platform and less investment costs. Further, this technological solution has the potential to reduce operational costs, thus increasing the profitable lifetime of the facility.

Basically, a number of industrial robots (electrical) make up a system for remote operations of a process plant, such as an oil and gas facility, in a harsh outdoor environment. Such environments are characterized as being dangerous, distant, dirty and dull. Typical tasks to be robotized are inspection and maintenance of process equipment. The robots will be equipped with different sensors and tools, or will have the capability to change between different sensors and tools, to be able to perform the various tasks. The robot manipulators and controllers hold features such as being explosion safe (Ex-certified), water proof and resistance to corrosion as well as bearing both high and low temperatures. Examples of typical applications are offshore installations, space, onshore oil & gas such as tar sands and wind turbines or windmills.

Because of the large size, complexity and demands to safety of such processes, more than one robot will often be required, and the robots will make up a system of consisting of multiple robots. These robots will have the capacity to perform tasks on their own, e.g. visual inspection or other inspection tasks, or to assist each other for more advanced tasks such as to perform coordinated operations when replacing a safety valve, or to collaborate on a single task, e.g. to lift a heavy object together.

Each robot will be able to perform a number of different tasks which means that the total number of robots will make up a redundant system. In case one robot should fail, another robot can take over and continue an ongoing or scheduled task. The overall system will perform scheduling and planning of the tasks, robots, tools and sensors, etc. to prioritise and coordinate the resources.

The robots are mobile to be able to move around in the process and perform tasks at different locations in and around the onshore or offshore installation. There are different solutions for making the robots mobile, namely mounting them on:
- Gantry cranes
- Rails, overhead or on the ground
- Vehicles

### BRIEF DESCRIPTION OF THE DRAWINGS

Embodiments of the invention will now be described, by way of example only, with particular reference to the accompanying drawings in which:
FIGURE 1 is a representation of an industrial robot mounted on a rail or gantry the example shown being related to an oil production platform according to an embodiment of the invention;
FIGURE 2 is a representation of an industrial robot mounted on a rail or gantry showing a close up of the robot arm arranged with a camera according to another embodiment of the invention;
FIGURE 3 is a representation of an industrial robot mounted on a rail or gantry arranged for inspection or monitoring or maintenance of a process section with tank, pumps and piping related to an oil production platform offshore or oil production installation onshore according to another embodiment of the invention;
FIGURE 4 is a representation of an industrial robot with parts of the robot indicated adapted to resist a harsh environment according to another embodiment of the invention;
FIGURE 5 is a schematic diagram of an industrial robot mounted on a rail or gantry showing a washing booth into which the robot may be moved for washing and/or coating with anti corrosion fluid, according to another embodiment of the invention.
FIGURE 6 is a schematic diagram of an industrial robot mounted on vehicle, and showing in conjunction to the robot and vehicle a storage location or garage which may also be arranged with a washing booth into which the robot may be moved for washing, blowing down with air, and/or coating with anti corrosion fluid, according to another embodiment of the invention.

### DETAILED DESCRIPTION OF PREFERRED EMBODIMENTS OF THE INVENTION

The main benefits of the new concept are significant reduction of CAPEX (capital expenditure), OPEX (operating costs) and construction time. To achieve this, the following solutions and technologies are fundamental:
- Modular process ("Lego"), designed for interactions with robotics technology
- Compact process equipment
- Use of gantry cranes
- Use of onshore control facilities
- Mobile decks (avoid scaffolding, multiple decks)
- Use of robotics for maintenance, inspection, safety and logistics operations
- Visualization technology for support during design, construction and operation with emphasize on robotics operation

This invention concerns a method for protecting an industrial robot against salt water and/or sour gas and particularly, corrosion and other potential damages as a consequence of exposure to these substances. The manipulator arm and the cable between the manipulator and the controller are exposed to the harsh environment. The controller and the teach pendant may be built in a safe shell, such as an explosion proof cabinet, or protected otherwise, and shielded from corrosive substances such as salt water/sour gas. There are particularly two parts of the robot which need protection as these parts are vulnerable to corrosion. These are the robot arm itself and the joints including motors, bearings, etc. Conventional manipulator arms are often made of a metal, which may corrode and/or oxide. Stainless steel, plastic or other composite materials avoid this problem. The joints including motors and bearings are also critical to protect against corrosion. The salt crystals also have the potential to damage bearings and other mechanical constructions when entering into these. Unlike (grinding) dust, salt crystals are larger and have a different shape. The crystals may, for example, sit as a layer inside the bearings and prevent the balls from rolling freely. In other applications, small objects do not represent the same problems.

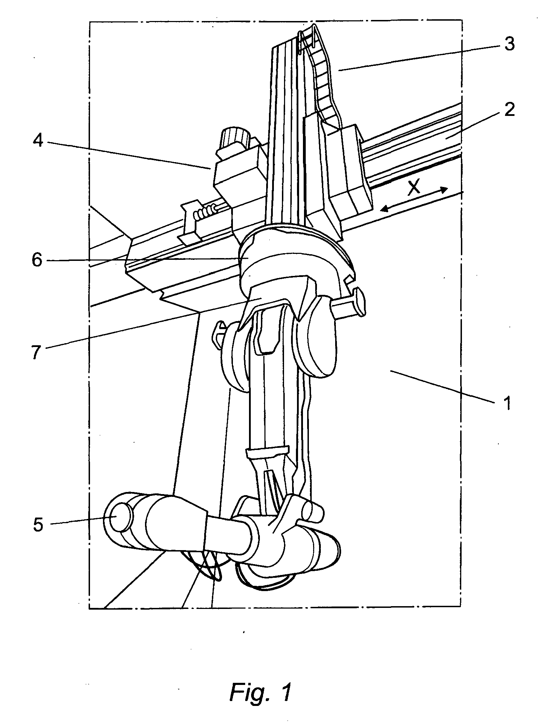

Figure 1 shows an industrial robot 1 mounted hanging down from a rail 2 or gantry and arranged mounted on a carriage 4, an apparatus that enables the robot to travel, which carriage is moveable along the gantry in the direction shown by arrow X. The industrial robot 1 is of the 6-axis type. The figure shows a base 6 holding the first joint axis and shows a tool holder 5 on the end of the robot arm. Cabling 3 is arranged suitable to allow the robot to move along the gantry back and forwards in the X axis of the gantry or rail.

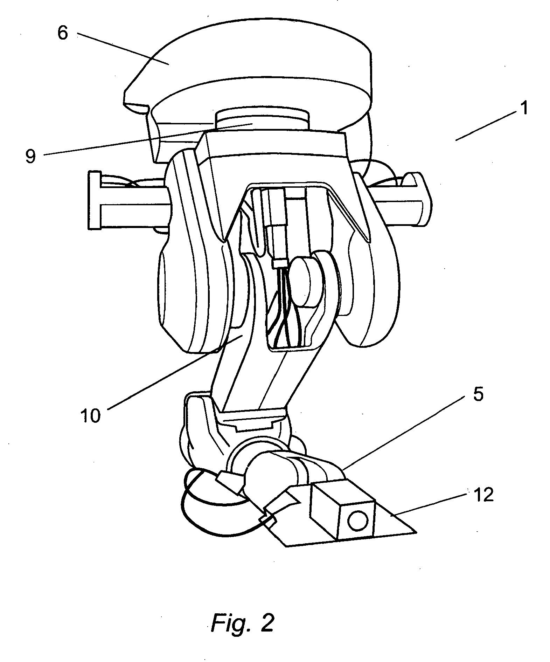

Figure 2 shows the industrial robot 1 which has a first joint 9 in the base 6 which allows rotation about a vertical axis. A joint 10 is shown indicated. The metal parts of joints that are exposed to the air may be coated with metal alloys or with thin film coatings to resist corrosion. The metal alloys or thin film coatings may comprise alloys or compounds containing metals such as titanium, chromium, nickel, niobium, vanadium, molybdenum or copper. The industrial robot 1 arm or manipulator arm has a camera 12 mounted at the tool holder 5. The camera is arranged to display a view at or around the tool centre point for a remote operator, and may be arranged moveable to point or focus at objects in other positions. Another, second camera may be fixed on the manipulator arm but not on the tool holder aimed in the direction of the tool centre point.

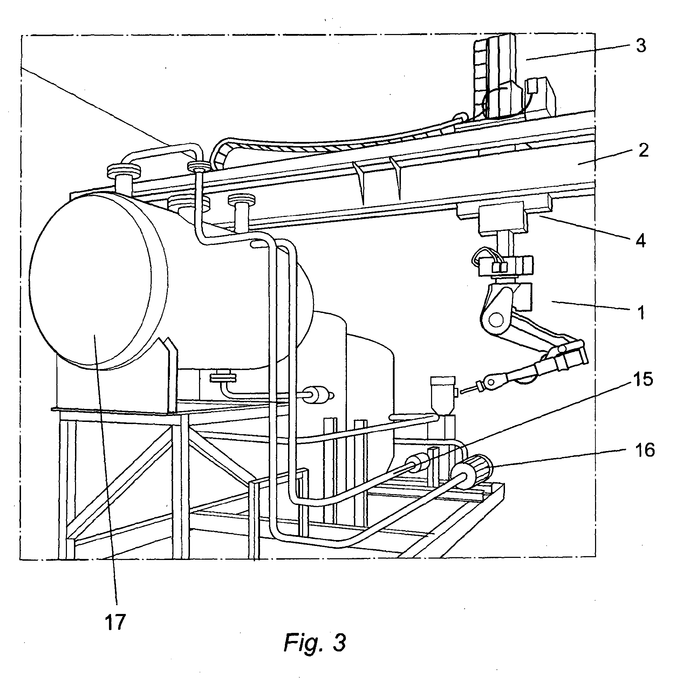

Figure 3 shows a test installation for a process section suitable for an oil and gas extraction or production installation. It shows a tank 17, process piping 15, a pump 16 and an industrial robot 1 mounted on a gantry 2 above the process section. Thus the robot may be moved to different points in the process section to point a camera for inspection purposes or to carry out a limited range of maintenance tasks.

Industrial robots arranged resistant to a harsh environment and mobile on the site may be applied one-at-a-time to a task. Such robots may also be arranged in a system consisting of two, or more, harsh approved robot manipulators being mobile for operation in harsh outdoor environments including offshore applications. The system may be:
- A mobile robotics system consisting of at least two robots
- Applications for a harsh approved robotics system The focus of this mobile embodiment is to describe a mobile robotics system comprising at least two robot manipulators. This robotics system will be approved to be explosion safe, water resistant, corrosion resistant, extreme temperatures and wind. The robot manipulators are standardized industrial 6 DoF (or other) robot manipulators further developed to be used outdoor in harsh environment and to be remotely operated.

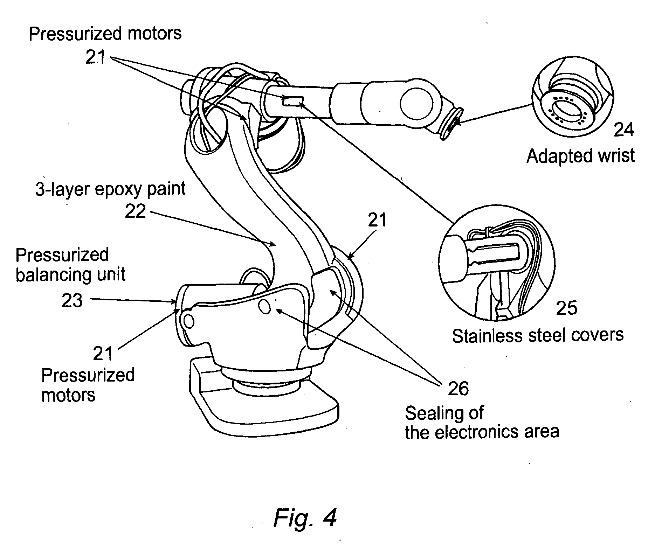

Figure 4 shows an industrial robot adapted to resist a harsh environment. It shows that the drive motors for moving each part of the arm may be arranged as pressurised motors 21 to prevent the ingress of surrounding air into the motors to reduce the risk of fire or an explosion. The balancing unit 23 may also be pressurized. The exposed metal parts of the robot are coated with a corrosion resistant layer such as a 3-layer epoxy coating 22 to protect the parts from corrosion or other chemical attack. The electronics parts 26 are sealed off from the environment. Parts of the arms or joints are arranged with stainless steel covers 25. The wrist 24 which normally holds a toolholder or a tool is a wrist with corrosion-resistant metal parts and bearings sealed against ingress of water or dust.

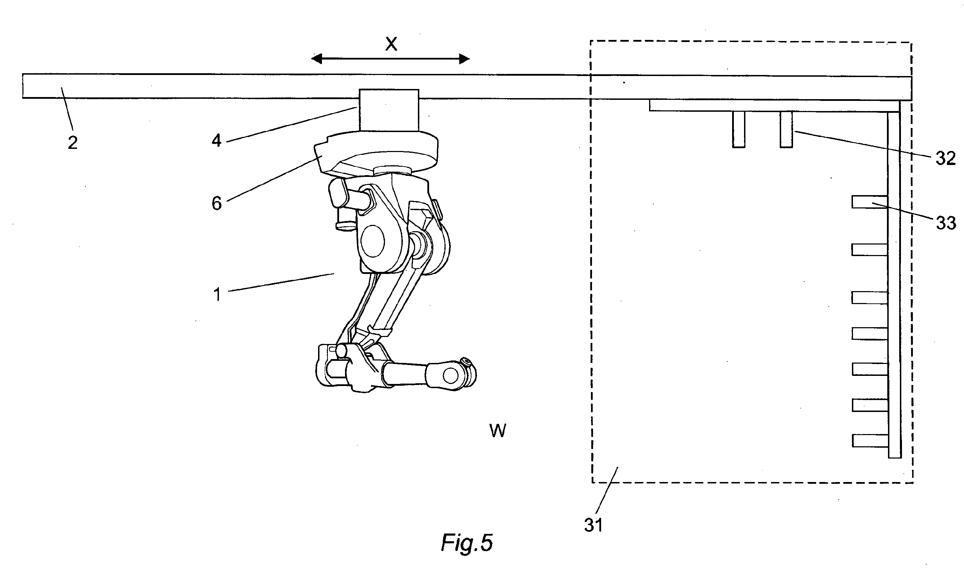

Figure 5 shows schematically a washing and/or coating booth W for an industrial robot. The booth may comprise an enclosure 31 shown here as a box with dashed lines. This "box" may be open and may have curtains or doors to close off the booth. Washing heads or spray heads 32, 33 are arranged for spraying one or more fluids to wash down the industrial robot. Different washing liquids, such as water, other solvents, treatment solutions or buffer solutions may be used. Gas or vapour may be used sprayed onto the robot. One or more air jets may also be included to blow of dirt and salt and/or to dry the robot. Coatings may be applied using one or more fixed or moveable spray heads in the washing booth W. Corrosion resistant coatings may be applied as a liquid, an emulsion or a gel-like layer. Salt water resistant coatings are described below.

Regarding robot operations in sour gas environments, an important part of protecting the industrial robots is that the robots:
I) are moved away from high concentration areas into a non exposed area where
   a) the non exposed area is achieved by distance, hence the robots are moved to an area far away as practical from the high concentration area
   b) the non-exposed area is a booth/garage where sour gas or other corrosive gases are vented and with strictly controlled atmospheric conditions
II) while moved periodically to the non-exposed area, the storage/garage location, one or more robots are treated in order to prevent, minimize or control the degradation caused by the sour gas and the acids that are formed by the sour gas, where the treatment consist of
   a) washing with pure water
   b) cleaning with high pressure air
   c) cleaning with high pressure water
   d) washing/cleaning with chemicals that neutralize acids formed by the sour gas
   e) combinations of above

This specification describes three different approaches regarding how to protect the robot from salt water which are to:
- Avoid salt water
- Allow salt water
- Protect with salt water

The first approach is about protecting the robot from direct exposure of salt water. Methods for this approach include different types of coatings and other physical barriers between the robot and salt water.

The second approach allows salt water to get in (limited) contact with the robot. These methods comprise periodically cleaning of the parts which have been exposed to salt water.

The third type of methods takes an unconventional approach as the goal of these methods is to protect the robot with salt water. There are different types of corrosion. Apart from galvanic corrosion, both (salt) water and air in contact with the metallic surface result in corrosion.

The following list presents different ways of protecting the robot:
1. (Salt) water proof coating and/or film
2. Robot cover / jacket
3. Nano particles to reject water
4. Rubber covers around the joints and other inputs/outputs
5. Over pressurized air inside robot arm
6. Robot coating booth to regularly apply new coating/film to the robot
7. Robot coater
8. Robot washing booth to regularly wash off the salt water
9. Robot washer
10. Air jets to blow off dirt including salt crystals
11. Coating consisting of nano particles which tie up salt water to continuously cover the robot manipulator with a thin layer of salt water

Several of the proposed methods may be applied to the robot to protect all parts properly from different types of damages and problems caused by the exposure to salt water and/or sour gas..
1: This solution suggests painting/covering the robot arm and other parts of the robot with a layer of coating, or film, which is salt water resistant. Such a coating will prevent salt water from getting in contact with the material of the robot arm and from entering the robot arm. Such a layer of coating will typically be damaged when the surface (e.g. the layer of coating) has got a scratch. On the surface of stainless steel, there is a thin film which protects it from oxidation.
2: A robot cover or jacket covers the entire manipulator arm and protects the arm from salt water. In addition, a robot cover may also protect against dust, wind, water, etc. The robot cover may further provide functionality such as heating and/or cooling. Also, over-pressurized air inside the robot cover prevents damp.
3: This method proposes to cover the manipulator arm with a layer of nano particles which reject salt water and prevent salt crystals to be attached to the surface.
4: This method concerns how to protect the joints from intrusion of salt water. A rubber cover or bellows which is elastic and follows the robot's movements is mounted around each joint and glued/welded to the robot arm to avoid intrusion of salt water. This method may be combined with other methods to protect against corrosion of the robot arm as well as to avoid condensed water / damp inside the robot arm.
5: Instead of "sealing" the joints, this method suggests to apply over-pressurized air within the robot arm to avoid water and particularly salt water (and other small particles) from intruding/entering through joints and other small openings such as inlets and outlets of cables (electrical, (pneumatic) air, fluids, etc.). Similarly, the air will prevent damp inside the robot arm. Another possible function of the air is to control the temperature of the air to keep it within a certain range in case of either very low or very high outdoor temperatures.
6: This method is based on the "car washing machine" principle. A coating booth, W which the robot arm enters regularly, sprays a new coating/film onto the surface. A precondition is that the coating/film needs to be redone and that it is environmental and cheap in order to be used regularly. The coating booth may be shaped as a box with the minimum inner dimensions of the robot. Alternatively, it can be a pipe with the length and dimensions of the robot arm. When the robot is freed up from other tasks, it enters the coating booth (regularly, but not too often) and gets a new coating.
7: Instead of a booth, this method suggests that the robots do the coating of each other. It requires that at least two robots are freed up from other activities at the same time. One of the robots picks up a spray gun and sprays/"paints" the other robot, and vice versa (in case both robots need new coating). To avoid any environmental problems due to the spraying, it may take place in a specific (protected) area where the vast of the coating can be collected.
8: In case the manipulator arm only is exposed for limited amount of salt water or damp/humidity including salt, a solution is to use a robot water cleaning system. Robot washing booth W based on the "car washing machine" principle is a booth similarly to the one described in method 6. Instead of applying a new layer of coating/film, it cleans the manipulator arm with clean water, eventually with added detergent to keep the surface clean and free from salt crystals.
9: Similar to 7 this method describes how to use the robot itself to water clean another robot as an alternative to the "robot washing booth".
10: This method suggests to use air jets to blow off salt water and particularly, salt crystals from the surface of the robot manipulator. The air jets may be located inside a booth W as suggested in 6 and 8.
11: Instead of keeping salt water away, this method takes a different approach as it proposes to cover the manipulator arm with a layer of nano particles which tie up salt water. The robot surface is then covered with a complete layer of salt water but not exposed to the air. This may prevent some types of corrosion to occur.
12. In additional protection against corrosion one or more anodes, sacrificial anodes may be placed on the robot. Dependent on the metal or metal coating involved an anode made from a metal that is sacrificed, ie is becomes corroded, is preferentially corroded before the metal to be protected is attacked. Anodes of made of zinc provide some protection for steel structures. Parts made of different metals, eg stainless steel, may require an anode made of a different metal.
13. In another development based on the "car washing machine" principle there washing booth W is arranged as a coating or treatment booth, which the robot enters regularly, and has a new coating/film sprayed onto the surface. This may be done in between tasks. The coating treatment may be designed to remove chemical deposits from sulphur containing substances. The washing treatment may also include suitable solvents, buffer solutions, or other substances to neutralize the corrosion processes due to eg sulphides, sulphates, or sulphuric acid.

One approach is to use a coating/film which needs to be reapplied, and which is environmentally acceptable and sufficiently cheap in order to be used regularly. The coating booth may be shaped as a box with the minimum inner dimension suitable to enclose the robot, and the vehicle, if vehicle mounted. The coat-ing/treatment booth may be arranged inside a garage or storage location where the robot is placed in between tasks. The garage area or at least part of it e.g. the booth, may be maintained sealed off to prevent or at least reduce the ingress of harmful gases from outside the garage/storage area. The storage location or garage to which the robot travels on the rail, gantry crane or vehicle is preferably located as far away as practical from sources of the aggressive chemicals such as sour gas or areas exposed to salt water. Alternatively, or as well, one wash-ing/coating device can be a pipe-shaped apparatus with the length and dimensions of the robot arm. When the robot is freed up from other tasks, it enters the coating booth and is washed and/or gets a new coating or treatment.

The invention describes a harsh-approved manipulator developed for harsh outdoor environments with a focus on being protective against corrosion and other damages from salt water and/or sour gas. The robot manipulator is a standardized industrial robot with electrical motors which is further developed to operate under harsh climate conditions where it is exposed to salt water and/or sour gas. The manipulator arm and the cable between the manipulator and the controller are exposed for the harsh requirements. Particularly, all openings including joints, cables and tubes going through the surface, are critical to protect to avoid salt water, or damped salt water, or sour gas, from entering the inside of the robot arm. The controller may be built in a safe shell and kept in a less harsh location. This invention proposes several different ways of protecting the robot manipulator from corrosion. Basically, corrosion from salt occurs most intense where metal is exposed to a combination of salt water and air. Material being completely covered by salt water all the time is less vulnerable for corrosion. The invention is based on three different approaches to the problem: To prevent contact between salt water and the robot or the vulnerable parts of the robot, to allow contact between salt water and the robot, and to expose the robot continuously with salt water. Some of the methods may protect either the robot arm from corrosion or the joints from salt crystals.

This invention describes a remotely operated harsh approved robot manipulator for use in environments which are normally dangerous, difficult and/or impossible for humans to access.

### Inspection of infrastructure on offshore installations

Future offshore installations are planned to be (partly) unmanned. The process is redesigned into standardized process modules built upon each other into process racks. A number of robots are mounted on (at least) two gantry cranes which allow full access to the entire process. These robots are remotely operated from onshore (or a neighbor platform or ship). As the field operators are removed from the platform, the operators in the operation centre still need to inspect the process equipment and infrastructure and will use the robots for this task. Some of the inspection tasks are performed automatically whereas others need human intervention. Some tasks may be controlled remotely by one or more people on shore, ship and/or other platform. Control and/or communication elements may be arranged at the remote location where people can remotely control and communicate with the robots.

Such remote operation may be carried out with any number of tasks. For example, robots including one or more protection features and included in an installation for extraction or production of petroleum products and arranged for carrying out monitoring and maintenance instructions may be remotely operated by people on ship, shore and/or other platform. The robot(s) may hold different sensors such as cameras 12 (video, IR, etc.), temperature gauge, vibration sensors, gas detectors, etc. The robots may be exposed for a rough environment including risk of explosions, (salt) water, extreme temperatures and wind.

### Light maintenance operations on offshore installations

This scenario is based on the same concept as described above. The robotics system is further set up to perform light maintenance tasks on the process equipment such as to replace a pipe section or a valve and to place and collect wireless instrumentation. The robots are exposed for a rough environment including risk of explosions, (salt) water, extreme temperatures and wind.

### Sample taking on offshore installations

On an offshore drilling installation and/or production installation, there is a large need for sample taking. Some existing platforms struggle with very thick oil, almost like tar. A harsh-approved robot can perform the taking of samples and automate this task to reduce the risks on humans. The robot for this scenario is exposed for a rough environment including risk of explosions, (salt) water, extreme temperatures, and wind.

### Drilling and other operations on onshore high-sulphate fields

Some onshore oil and gas fields contain sulfate which make it impossible for people to work unprotected in these areas. Robotized solutions are demanded for inspection and different operation tasks to be able to operate in such areas. The robots are exposed for a rough environment including different chemicals. The robot manipulator may be protected from such chemicals based on one, or more, of the proposed methods.

One or more parts of the invention as described throughout the specification may be applied in onshore installations, especially for those onshore installations with a harsh environment. In certain countries onshore installations may have a harsh environment where winds contain large amounts of dust and/or sand. Secondly there are installations for dealing with eg oil in tar sands with high-sulphur content petroleum substances and the presence of sour gas pose serious challenge in terms of corrosion damage to machinery and a chemical and toxicity threat to human operators from hydrogen sulphide gas, other sulphides, sulphates, elemental sulphur, or sulphuric acid.

### Inspection and maintenance operations of offshore windmills

Another offshore application is inspection and maintenance tasks of offshore windmills. Most tasks may be inside the wind turbine or windmills housing, but the damped air will still contain salt crystals.

This invention describes a number of methods to protect the robot arm from corrosion and the joints from entering of salt water. One or more methods may be used in combination to give full protection. The invention makes operations possible in harsh, offshore environments. The invention expands usage of existing industrial robot configuration with electrical motors to offshore environments, or similar environments with corrosive challenges.

The robots in an oil & gas extraction, production or distribution installation can be mounted on large gantry crane(s) which may be arranged to straddle the whole process. If the process is rather large and the total number of robots requires more than one gantry crane, these have to be dimensioned to move under/over each other. One or more robots are then mounted on each gantry crane which moves the robot in right position in relation to the process for the robot to perform a task. The robot controller will typically be mounted on, or within, the gantry crane, and will be encapsulated in an EX-proofed cabinet, or similar. The robot will be fed with control signals and supplied with electrical power wired through the gantry crane. Also, signals from sensors and tools are fed back into the system through cables on, or within, the gantry crane. The gantry crane being a part of the mobile robotics system will have to fulfill the same requirements for the harsh environment as the robots and controllers.

The robots can alternatively be mounted on a system of rails which makes the robots mobile independently of each other. The robots can move around in the process and access process equipment as needed. The rails being a part of the mobile robotics system will have to fulfill the same requirements for the harsh environment as the robots and controllers.

A third solution is to mount the robots on (autonomous) vehicles to make the robots mobile. Generally, one robot will be mounted on each vehicle. In one embodiment the robots will be fully mobile and can move around over the entire process site without any restrictions. The robot controller, batteries for power and a buffer tank for compressed air will be built into the vehicle, or mounted onto the vehicle. Typically, the vehicle will enter the process site when the robot has to perform a task, and will return to a 'garage' or 'parking slot' with a charging station. The vehicle will be recharged with both power and compressed air at this station. The robot and/or vehicle may also be cleaned with water or air as in a washing booth arranged in the garage. Alternatively the robot and(or vehicle may be sprayed or washed with treatment solutions or salt-water resistant coatings, or sulphur-compound resistant coatings. vehicle Such vehicles being a part of the mobile robotics system will have to fulfill the same requirements for the harsh environment as the robots and controllers.

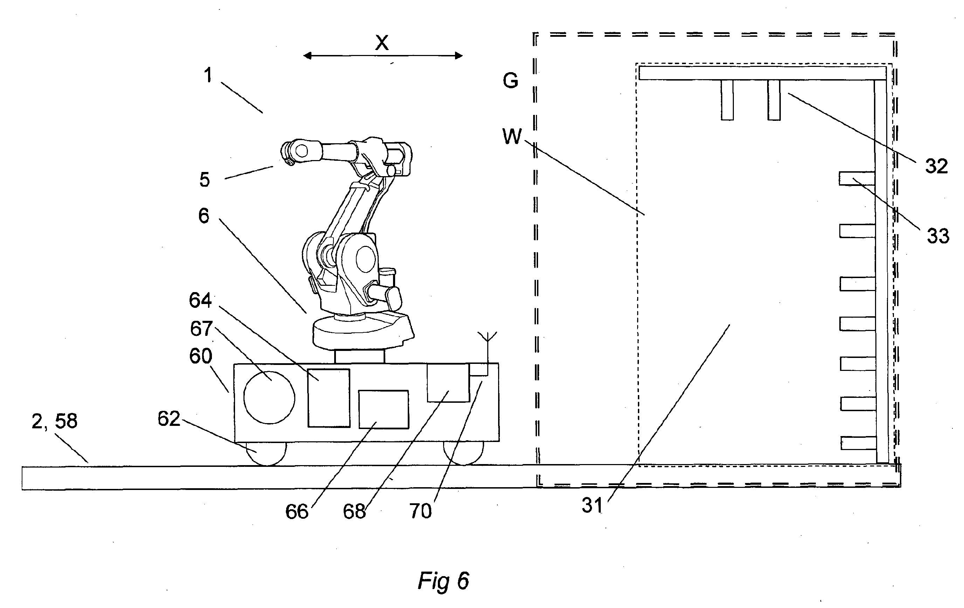

Figure 6 shows a vehicle 60 on which is mounted an industrial robot 1. In this preferred embodiment, the industrial robot is arranged mounted on a vehicle. The vehicle may be rail mounted, and thus a variation on the embodiment of Figure 5, where the robot travels on an overhead rail, or gantry. A rail mounted vehicle is preferably driverless, and controlled remotely.

The vehicle may instead not be mounted on rails, but be driven along the ground or along a surface of an installation or platform. Preferably such a vehicle is also driverless. The Figure 6 shows a vehicle 60 with wheels 62 positioned on the ground or a platform of some kind 58 or on a rail 2. An industrial robot 1 is arranged mounted on the vehicle. Vehicle 60 has a battery 64, a drive motor of some sort 66, and a control unit 68. The vehicle may be arranged with a tank 67 for holding compressed air used by/supplied to the robot. The control unit controls the vehicle, and may also be linked to the industrial robot 1. Control unit 68 preferably has a wireless communication link, indicated here by antenna 70.

Robot 1 is preferably powered by the battery 64 of the vehicle 60. Alternatively vehicle 60 is equipped with a power source, such as a generator. Vehicle 60 is preferably arranged for recharging the battery at a storage location G, such as a garage of some sort, where the vehicle and robot are placed between tasks. The storage location G may also be arranged with connection points and sources or access to compressed air used to fill up the compressed air tank 67 on the vehicle 60.

Outside of the storage location the vehicle may also be arranged with suitable electrical power connections to connect to mains power in the installation in locations for carrying out tasks, provided that such connection points are properly protected in, eg an ATEX (explosions risk) area. The robot and vehicle may be powered using a hard-wired connection, eg a cable of some sort connected to mains power in the installation.

Inside the garage or storage location G of Figure 6 may be combined with a washing booth W, similar to that described in relation to the embodiment of Figure 5. In this case the nozzles 32, 33 may be for water, and or for delivering eg ventilation air or compressed air. In a chemically aggressive or corrosive location a treatment solution, or a succession of washing and/or treatment solutions to neutralize or otherwise treat chemical contaminants, may be sprayed from nozzles 32, 33 on to the robot, the vehicle, or on to parts thereof. When in relatively close proximity to a chemically corrosive location the garage or storage location G may be enclosed or encloseable, so that when the vehicle is in place, the ingress of corrosive gases from the surroundings is prevented or at least reduced. After the vehicle has been remotely or automatically driven into the storage location G and the garage closed to the outside, the air in the storage location may be vented. This may be done before cleaning/washing the vehicle, or after, or both. Part of the structure of the storage location may be sealed against the ingress of gas from outside. Part of the storage location may be maintained at a positive air pressure to prevent or at least reduce the ingress of aggressive gases. The atmosphere inside the storage location or garage may be maintained at a cooler or higher temperature than the surroundings and/or at a controlled humidity.

## Claims

1. An installation adapted for extraction or production of petroleum products in a harsh outdoors environment comprising at least one industrial robot (1) arranged for carrying out monitoring and maintenance operations wherein said at least one industrial robot comprise a robot arm with a plurality of arm parts movable relative each other about a plurality of joints and with electric motors for moving the arm parts, wherein the at least one robot is arranged with a transport apparatus (4, 60) such that said at least one robot is moveable between two or more locations of said installation, wherein said locations comprise at least one work location and a storage location (G), and wherein the storage location is arranged such that the at least one industrial robot is not exposed to the harsh outdoor environment when it is in the storage location.

2. The installation according to claim 1, wherein the storage location is arranged with sealing devices to resist the ingress of gas from outside the storage location (G).

3. The installation according to claim 1, wherein the at least one industrial robot (1) is arranged moveable to a washing booth (W, 31), arranged such that a said at least one industrial robot is washed with one or more solutions and/or blown down with air.

4. The installation according to claim 1, wherein the work location or the storage location (G) comprises a washing booth (W, 31) arranged such that a said at least one industrial robot (1) is washed and/or coated with a passive solvent or an active solvent such as a corrosion inhibiting fluid.

5. The installation according to claim 6, wherein the atmospheric conditions of the storage location (G) are controlled.

6. The installation according to claim 1, wherein at least some of the exterior surface of a robot arm is provided with a corrosion resistant coating.

7. The installation according to claim 1, wherein the at least one industrial robot (1) is mounted on a transport apparatus (4) for movement or travel on one or more a rails (2) or gantry cranes between the two or more locations.

8. The installation according to claim 1, wherein the at least one industrial robot is mounted on a transport apparatus, comprising a vehicle (60), arranged for movement or travel between the two or more locations.

9. The installation according to claim 1, wherein the at least one industrial robot is mounted on a vehicle for travel in any direction.

10. The installation according to claim 8 or claim 9, wherein said vehicle (60) is arranged with a control unit (68) and communication unit (70) and to be remotely operated.

11. The installation according to claim 8 or claim 9, wherein one or more electrical power connections are arranged such that the vehicle (60) can be connected and receive electrical power for charging a battery for powering the at least one industrial robot.

12. The installation according to claim 8 or claim 9, wherein one or more flexible or extendable electrical power connections are arranged such that said vehicle (60) can receive electrical power for powering the at least one industrial robot.

13. The installation according to claim 8 or claim 9, wherein one or more compressed air connections are arranged such that the vehicle (60) can be connected and receive compressed air for storage on the vehicle.

14. The installation according to any of the previous claims, wherein one or more cameras (12) are mounted on an arm of the robot.

15. A method for operating an industrial robot in an installation for extraction or production of petroleum products in a harsh outdoors environment comprising at least one industrial robot (1) arranged for carrying out monitoring and maintenance operations, said industrial robot comprising a robot arm with a plurality of arm parts movable relative each other about a plurality of joints and electrical motors for moving the arm parts, wherein said operations include protecting said industrial robot from chemical corrosion, wherein the method comprises moving said industrial robot with a transport apparatus (4, 60) such that said industrial robot travels between two or more locations of said installation, comprising at least one work location and a storage location (G), whereby the industrial robot is not exposed to the harsh outdoor environment when it is in the storage location.

16. A method according to claim 15, comprising moving the industrial robot to a washing booth (W, 31) at the storage location (G).

17. A method according to claim 15 or 16, wherein at least some of the exterior surface of the robot arm is provided with a corrosion resistant coating.

18. A method according to claim 15 or 16, comprising removing one or more chemical substances from the industrial robot (1) by washing said industrial robot down with a liquid and/or blowing said industrial robot down with air.

19. A method according to claim 15 or 16, comprising removing one or more chemical substances from the industrial robot (1) by washing said industrial robot down with a liquid and/or blowing said industrial robot down with air in an enclosed area or booth (W, 31).

20. A method according to claim 15 or 16, wherein the method further comprises blowing off dirt including corrosive compounds or salt crystals from the industrial robot (1) by means of air jets.

21. A method according to claim 15 or 16, wherein the method comprises regularly washing down the industrial robot (1) with a passive solvent or an active solvent.

22. A method according to claim 15 or 16, wherein the method further comprises: applying after the washing a salt water proof coating to the industrial robot (1).

## Patentansprüche

1. Anlage, die zur Extraktion und Herstellung von Erdölprodukten in einer rauen Außenumgebung ausgelegt ist und mindestens einen industriellen Roboter (1) umfasst, der dazu ausgelegt ist, Überwachungs- und Wartungsarbeitsgänge auszuführen, wobei der mindestens eine industrielle Roboter einen Roboterarm mit mehreren Armabschnitten, die relativ zueinander um mehrere Gelenke beweglich sind, und elektrische Motoren zum Bewegen der Armabschnitte umfasst, wobei der mindestens eine Roboter mit einer Transportvorrichtung (4, 60) versehen ist, so dass der mindestens eine Roboter zwischen zwei oder mehr Orten der Anlage beweglich ist, wobei die Orte mindestens einen Arbeitsort und einen Lagerort (G) umfassen und wobei der Lagerort so angeordnet ist, dass der mindestens eine industrielle Roboter nicht der rauen Außenumgebung ausgesetzt ist, wenn er sich an dem Lagerort befindet.

2. Anlage nach Anspruch 1, wobei der Lagerort mit Dichtungsvorrichtungen versehen ist, um dem Gaseintritt von außerhalb des Lagerorts (G) zu widerstehen.

3. Anlage nach Anspruch 1, wobei der mindestens eine industrielle Roboter (1) so angeordnet ist, dass er zu einer Waschkabine (W, 31), die so angeordnet ist, dass der mindestens eine industrielle Roboter mit einer oder mehreren Lösungen gewaschen wird und/oder mit Luft abgeblasen wird, beweglich ist.

4. Anlage nach Anspruch 1, wobei der Arbeitsort oder der Lagerort (G) eine Waschkabine (W, 31) umfasst, die so angeordnet ist, dass der mindestens eine industrielle Roboter (1) mit einem passiven Lösemittel oder einem aktiven Lösemittel, wie z. B. einem Korrosionsschutzfluid, gewaschen und/oder beschichtet wird.

5. Anlage nach Anspruch 6, wobei die atmosphärischen Bedingungen des Lagerorts (G) gesteuert werden.

6. Anlage nach Anspruch 1, wobei mindestens ein Teil der äußeren Oberfläche des Roboterarms mit einer korrosionsbeständigen Beschichtung versehen ist.

7. Anlage nach Anspruch 1, wobei der mindestens eine industrielle Roboter (1) auf einer Transportvorrichtung (4) zur Fortbewegung auf einer oder mehreren Schienen (2) oder Portalkränen zwischen den zwei oder mehr Orten angebracht ist.

8. Anlage nach Anspruch 1, wobei der mindestens eine industrielle Roboter auf einer Transportvorrichtung angebracht ist, die ein Fahrzeug (60), das zur Fortbewegung zwischen den zwei oder mehr Orten ausgelegt ist, umfasst.

9. Anlage nach Anspruch 1, wobei der mindestens eine industrielle Roboter auf einem Fahrzeug zur Fortbewegung in einer beliebigen Richtung angebracht ist.

10. Anlage nach Anspruch 8 oder Anspruch 9, wobei das Fahrzeug (60) mit einer Steuereinheit (68) und einer Kommunikationseinheit (70) versehen ist und ferngesteuert betrieben wird.

11. Anlage nach Anspruch 8 oder Anspruch 9, wobei eine oder mehrere elektrische Stromverbindungen so angeordnet sind, dass das Fahrzeug (60) verbunden werden kann und elektrischen Strom beziehen kann, um den mindestens einen industriellen Roboter zu versorgen.

12. Anlage nach Anspruch 8 oder Anspruch 9, wobei eine oder mehrere flexible oder erweiterbare elektrische Stromverbindungen so angeordnet sind, dass das Fahrzeug (60) elektrischen Strom beziehen kann, um den mindestens einen industriellen Roboter zu versorgen.

13. Anlage nach Anspruch 8 oder Anspruch 9, wobei einer oder mehrere Druckluftverbindungen so angeordnet sind, dass das Fahrzeug (60) verbunden werden kann und Druckluft zur Speicherung an dem Fahrzeug beziehen kann.

14. Anlage nach einem der vorhergehenden Ansprüche, wobei eine oder mehrere Kameras (12) an einem Arm des Roboters angebracht sind.

15. Verfahren zum Betreiben eines industriellen Roboters in einer Anlage, die zur Extraktion und Herstellung von Erdölprodukten in einer rauen Außenumgebung ausgelegt ist und mindestens einen industriellen Roboter (1) umfasst, der dazu ausgelegt ist, Überwachungs- und Wartungsarbeitsgänge auszuführen, wobei der industrielle Roboter einen Roboterarm mit mehreren Armabschnitten, die relativ zueinander um mehrere Gelenke beweglich sind, und elektrische Motoren zum Bewegen der Armabschnitte umfasst, wobei die Arbeitsgänge ein Schützen des industriellen Roboters vor chemischer Korrosion umfassen, wobei das Verfahren ein Bewegen des industriellen Roboters mit einer Transportvorrichtung (4, 60) umfasst, so dass der industrielle Roboter sich zwischen zwei oder mehr Orten der Anlage, die mindestens einen Arbeitsort und einen Lagerort (G) umfassen, bewegt und wobei der industrielle Roboter nicht der rauen Außenumgebung ausgesetzt ist, wenn er sich an dem Lagerort befindet.

16. Verfahren nach Anspruch 15, das ein Bewegen des industriellen Roboters zu einer Waschkabine (W, 31) an dem Lagerort (G) umfasst.

17. Verfahren nach Anspruch 15 oder 16, wobei mindestens ein Teil der äußeren Oberfläche des Roboterarms mit einer korrosionsbeständigen Beschichtung versehen ist.

18. Verfahren nach Anspruch 15 oder 16, das ein Entfernen einer oder mehrerer chemischer Substanzen von dem industriellen Roboter (1) durch Abwaschen des industriellen Roboters mit einer Flüssigkeit und/oder Abblasen des industriellen Roboters mit Luft umfasst.

19. Verfahren nach Anspruch 15 oder 16, das ein Entfernen einer oder mehrerer chemischer Substanzen von dem industriellen Roboter (1) durch Abwaschen des industriellen Roboters mit einer Flüssigkeit und/oder Abblasen des industriellen Roboters mit Luft in einem abgeschlossenen Bereich oder einer abgeschlossenen Kabine (W, 31) umfasst.

20. Verfahren nach Anspruch 15 oder 16, wobei das Verfahren ferner ein Wegblasen von Verunreinigungen, die korrosive Verbindungen oder Salzkristalle beinhalten, von dem industriellen Roboter (1) mittels Luftstrahlen umfasst.

21. Verfahren nach Anspruch 15 oder 16, wobei das Verfahren ein regelmäßiges Abwaschen des industriellen Roboters (1) mit einem passiven Lösemittel oder einem aktiven Lösemittel umfasst.

22. Verfahren nach Anspruch 15 oder 16, wobei das Verfahren ferner Folgendes umfasst: Anwenden einer salzwasserbeständigen Beschichtung auf den industriellen Roboter (1) nach dem Waschen.

## Revendications

1. Installation adaptée pour l'extraction ou la production de produits pétroliers dans un environnement extérieur rigoureux comprenant au moins un robot industriel (1) agencé de façon à effectuer des opérations de surveillance et de maintenance, dans laquelle ledit au moins un robot industriel comprend un bras de robot avec une pluralité de parties de bras mobiles les unes par rapport aux autres autour d'une pluralité de joints et avec des moteurs électriques pour bouger les parties de bras, dans laquelle l'au moins un robot est pourvu d'un appareil de transport (4, 60) de façon à ce que ledit au moins un robot puisse être bougé entre deux emplacements ou plus de ladite installation, dans laquelle lesdits emplacements comprennent au moins un emplacement de travail et un emplacement d'entreposage (G), et dans laquelle l'emplacement d'entreposage est agencé de manière à ce que l'au moins un robot industriel ne soit pas exposé à l'environnement extérieur rigoureux lorsqu'il est dans l'emplacement d'entreposage.

2. Installation selon la revendication 1, dans laquelle l'emplacement d'entreposage est pourvu de dispositifs d'étanchéité pour résister à l'entrée de gaz venant de l'extérieur de l'emplacement d'entreposage (G).

3. Installation selon la revendication 1, dans laquelle l'au moins un robot industriel (1) est agencé de façon à pouvoir bouger vers un poste de lavage (W, 31) agencé de manière à ce qu'un dit au moins un robot industriel soit lavé avec une ou plusieurs solutions et/ou séché par soufflage d'air.

4. Installation selon la revendication 1, dans laquelle l'emplacement de travail ou l'emplacement d'entreposage (G) comprend un poste de lavage (W, 31) agencé de manière à ce qu'un dit au moins un robot industriel (1) soit lavé et/ou enduit d'un solvant passif ou d'un solvant actif tel qu'un fluide anticorrosion.

5. Installation selon la revendication 6, dans laquelle les conditions atmosphériques de l'emplacement d'entreposage (G) sont contrôlées.

6. Installation selon la revendication 1, dans laquelle au moins une partie de la surface extérieure d'un bras de robot est pourvue d'un revêtement résistant à la corrosion.

7. Installation selon la revendication 1, dans laquelle l'au moins robot industriel (1) est monté sur un appareil de transport (4) pour permettre son mouvement ou son déplacement sur un ou plusieurs rails (2) ou portiques entre les deux emplacements ou plus.

8. Installation selon la revendication 1, dans laquelle l'au moins robot industriel (1) est monté sur un appareil de transport comprenant un véhicule (60), agencé de façon à permettre le mouvement ou le déplacement entre les deux emplacements ou plus.

9. Installation selon la revendication 1, dans laquelle l'au moins robot industriel est monté sur un véhicule pour se déplacer dans n'importe quelle direction.

10. Installation selon la revendication 8 ou la revendication 9, dans laquelle ledit véhicule (60) est pourvu d'une unité de commande (68) et d'une unité de communication (70) et agencé de façon à être actionné à distance.

11. Installation selon la revendication 8 ou la revendication 9, dans laquelle une ou plusieurs connexions d'alimentation électrique sont agencées de manière à ce que le véhicule (60) puisse être connecté et recevoir une alimentation électrique pour charger une batterie et fournir de l'énergie à l'au moins un robot industriel.

12. Installation selon la revendication 8 ou la revendication 9, dans lequel une ou plusieurs connexions d'alimentation électrique flexibles ou extensibles sont agencées de manière à ce que ledit véhicule (60) puisse recevoir une alimentation électrique pour fournir de l'énergie à l'au moins un robot industriel.

13. Installation selon la revendication 8 ou la revendication 9, dans laquelle un ou plusieurs raccordements d'air comprimé sont agencés de manière à ce que le véhicule (60) puisse être raccordé et recevoir de l'air comprimé à stocker sur le véhicule.

14. Installation selon l'une quelconque des revendications précédentes, dans laquelle une ou plusieurs caméras (12) sont montées sur un bras du robot.

15. Procédé pour actionner un robot industriel dans une installation pour l'extraction ou la production de produits pétroliers dans un environnement extérieur rigoureux comprenant au moins un robot industriel (1) agencé de façon à effectuer des opérations de surveillance et de maintenance, ledit robot industriel comprenant un bras de robot avec une pluralité de parties de bras mobiles les unes par rapport aux autres autour d'une pluralité de joints et des moteurs électriques pour bouger les parties de bras, dans lequel lesdites opérations comprennent la protection dudit robot industriel contre la corrosion chimique, ce procédé comprenant le déplacement dudit robot industriel avec un appareil de transport (4, 60) de façon à ce que ledit robot industriel se déplace entre deux emplacements ou plus de ladite installation, comprenant au moins un emplacement de travail et un emplacement d'entreposage (G), ce qui fait que le robot industriel n'est pas exposé à l'environnement extérieur rigoureux lorsqu'il est dans l'emplacement d'entreposage.

16. Procédé selon la revendication 15, comprenant le déplacement du robot industriel vers un poste de lavage (W, 31) à l'emplacement d'entreposage (G).

17. Procédé selon la revendication 15 ou 16, dans lequel au moins une partie de la surface extérieure du bras du robot est pourvue d'un revêtement résistant à la corrosion.

18. Procédé selon la revendication 15 ou 16, comprenant l'enlèvement d'une ou de plusieurs substances chimiques du robot industriel (1) en lavant ledit robot industriel avec un liquide et/ou en séchant ledit robot industriel par soufflage d'air.

19. Procédé selon la revendication 15 ou 16, comprenant l'enlèvement d'une ou de plusieurs substances chimiques du robot industriel (1) en lavant ledit robot industriel avec un liquide et/ou en séchant ledit robot industriel par soufflage d'air dans une zone ou un poste clos (W, 31).

20. Procédé selon la revendication 15 ou 16, ce procédé comprenant en outre l'enlèvement de la crasse du robot industriel (1) par soufflage au moyen de jets d'air, la crasse comprenant des composés corrosifs ou des cristaux de sel.

21. Procédé selon la revendication 15 ou 16, ce procédé comprenant le lavage régulier du robot industriel (1) avec un solvant passif ou un solvant actif.

22. Procédé selon la revendication 15 ou 16, ce procédé comprenant en outre : l'application, après le lavage, d'un revêtement imperméable à l'eau salée sur le robot industriel (1).
